# EUROPEAN PATENT APPLICATION

(11) **EP 3 091 464 A1**
(43) Date of publication of application: **09.11.2016**
(21) Application number: 16168197.8
(22) Date of filing: 03.05.2016
(51) Int. Cl.: G06F 21/12, H04N 21/254, H04N 21/418, H04N 21/4405, H04N 21/4408, H04N 21/4627

(54) **SYSTEM FOR RENDERING THE COMMERCIALISATION OF ELECTRONIC DOCUMENTS SECURE**

(30) Priority: 04.05.2015 IT IT20150392
(71) Applicant: Vettore, Rossano, 36031 Dueville (VI) (IT)
(72) Inventor: Vettore, Rossano, 36031 Dueville (VI) (IT)

(57) **Abstract**

Object of the present invention is constituted by a hardware device which for its internal firmware and for the storage of data, allows to make secure the commercialization of electronic documents also through the internet.

## Description

Subject of this concerns a system to secure the marketing of electronic documents (texts, audio and video sequences) and in particular of electronic books also called digital books, including through the Internet.

### State of art

In the following explicit reference is made to the book component to facilitate the handling, however, the system is suitable in all generality to also be used to manage and treat other types of electronic documents, such as books with multimedia inserts, audio documents and video sequences, and joining of these.

The book in digital format is universally known as e-books. The presence of e-books available in a general manner on any marketing platform online but has not contributed in decisive way in publishing revive the fortunes and to decree a development like any other service conveyed through the internet.

The reason for this limited diffusion is not understood, although a number of advantages that should make, if not checking the limited benefits for publishers and authors.

Currently there are various electronic devices, in addition to the generic smartphones and tablets, which are specifically developed and aimed to make comfortable the reading of a electronic book as the traditional reading on paper

Said device called e-readers can read in some cases only one own proprietary format of the book, in other cases they can read different formats.

The best known and popular formats are type epub, azw (Amazon's proprietary format) and PDF (mainly used in PCs).

The ePub format is the standard in digital publishing, the most widely used on e-reader or tablet for ease of changing font sizes, font types with automatic repagination on the screen for optimal reading without having to scroll horizontally lines.

EPub is an open format that is well known and not protected.

The same applies to the PDF format, format fixed line favorite in PCs.

The azw format instead is a proprietary format that does not allow the free circulation and diffusion of the text (Amazon allows the user, for each book purchased, to download the file on five different devices, already partly encroaching so the rights of authors and publishers). In fact even this format has become in fact manageable using special utilities that allow the conversion of text into other formats (ePub, pdf, ...) and then read with any program. A system that should protect a file (text, audio or video), and to prevent the copy is made by the system called DRM (Digital Rights Management) Adobe. This system, with the inclusion of metadata in the file creates a kind of electronic locks that should prevent the use of files on devices other than the one where it was downloaded, thereby protecting the publishers about the illegal copying of files. This system, however, is a big limit to the legitimate user who can not read on their own and another different device the document regularly purchased.

Moreover, even the DRM are largely bypassable from the Internet free available programs, which are also used by legitimate users to overcome the limitations of the system.

So basically, although in theory there is the possibility of limiting the spread of unauthorized copies, actually both the drawbacks introduced by protection devices and because the same have proven to be easily circumvented, currently there is no safe way to propose a digital book that can not be more or less easily copied.

The only real protection of a digital edition is to cost little, to make this loss of time to copy than buying regular inconvenient. Of course this expedient of the cost must always be profitable for authors and distributors, while limiting the electronic document can be copied.

### Objects

The development of a system that provides security to authors and publishers around the inability to illegally copy their work, and the user can use, in proper contractual limits, the work also bought on different devices is the purpose of the present invention.

A further object of the present invention is to monitor the market on an ongoing basis on the presence and spread of unauthorized copies.

A different object of the present invention is to continuously update the security systems while preserving the backward compatibility.

A yet another object of the present invention is to provide a secure marketing system which will not switch drawbacks for the user in the management of the document which it is legitimate holder of rights.

An important object of the present invention is to make available a system that can help to prevent the illegal market or the fraudulent subtraction of the legitimate purchasers system.

A different object of the present invention consists in the easy and flexible management by the system in dealing with the different users in a differentiated manner for categories or based on agreements or custom conventions.

A not least object of the present invention is given by the easy handling for the user to acquire, process, transport and keep all the documents acquired in a legal manner.

Further objects of the present invention are:
1. The ability for the user to "sell" works acquired already read or are no longer of interest to safeguarding the rights of authors and publishers;
2. Make it possible to insert notes in the form of text, graphics, sound sequences and/or videos (very useful for school);
3. Make it possible editions Time (rental) in digital form in respect of authors and publishers;
4. Use possible without the Internet connection active;

### Description of the invention

Subject of the invention consists in a "storage " electronic device ( storage of data), referred to as PEN-LIBRARY (hereinafter simply also Pennetta), physically with a non-volatile memory chips and by a microcontroller for the management of the same and of the communication with the outside; in the firmware of the microcontroller a key is inserted (encryption key) is randomly generated (random) in the production phase, with which the crypt microcontroller each work inserted in the device itself, being able said work be usable, by means of a user device via a special software can interface with said microcontroller firmware for the decryption.

Profitably called key is different for each device, and is not known to the user.

Being the firmware inserted in the internal memory of the microcontroller and this being erasable and rewritable but not copyable, there is no way to access the encryption key stored in the memory stick and then work, if not with the specially crafted instruments, namely the visualization software on the reading device that will call provisionally Reader-Book. In this way it is not possible to directly access the files of the works stored in the memory stick (only Reader-Book can do), and if you tried to remove the non-volatile memory chips to read it directly, their content would be incomprehensible.

Still in the process of production are installed in the other two keys Pennetta firmware, called public key and private key, by the particular characteristics: they are both early and are very large numbers (2048 bits, about 300 digits). Their use will occur in phases download/transfer/viewing a file, or during validation and verification steps.

Firmware is also entered the serial number that is partially visible to the user.

This allows to achieve two important goals: security and flexibility.

Security is provided by the fact that you can view the work discharged by connecting the pen and only using the Reader-Book software, so it is impossible any unauthorized copying; flexibility is the fact that the user can see where he wants his works not oblige it to use a particular device and then enough for him to move with his LIBRARY-PEN without having to take your tablet, PC, e-reader or other and without the need for an internet connection to browse his works. It is enough that the device is installed Reader-Book software.

A more comprehensive and versatile implementation of the invention provides its use in an articulated system consisting of a few other systems that are:
1. A website, of course owner, from which the user can choose the work that interests them and download it.
2. A software called PAY-BOOK provisionally, (available for various devices and operating systems) that allows you to perform the work chosen by the user selected by managing the payment and downloading from the website. Also this software is freely downloadable from the site.
3. An electronic device, provisionally called WRITEBOX, equipped with several USB ports, which is the only entity able to "save/write" on a Pennetta the file downloaded from the internet. The device has its own unique serial number (visible even partially outside the device) and an inner key, inserted in the production phase, unknown to the user. The operation of this device is subject to its site registration and legal possession of such a device allows the downloading of the works from the site.

In this manner, the invention allows to be marketed not only with the works already stored in Pennetta, but also the next "charging" of the works, acquired by specific portal within the pen itself by downloading them through the internet.

Advantageously, the management and protection system of an electronic book, or other work storable within the Pennetta, makes available to each call command part or a block of data, after having at least a first time decrypted with its own internal key, being a second decryption before a part or a document block can be made available through a second stage of decryption delegated to the proprietary software.

Advantageously the system of management and protection of an electronic book allows you to store the data of electronic documents within the electronic device only after the said electronic device has been validated by the operator by verifying the legitimacy of the holder and the content already present in it and transferring it through a constantly changing encryption the requested document.

Advantageously the storage of data within the electronic device is both encrypted and is inseparably linked with the hardware of the electronic instrument, possibly by means of a linked security key in a safe manner and not visible to the user, the device firmware. Conveniently, the management system provides for the writing of said electronic document within said electronic device of a writebox which is validated at each networking by the system manager.

Advantageously, by means of said writebox is possible to transfer, but not the copy, content, or a part thereof from a first electronic device to a second electronic device being configured in such a case the transfer of usage rights of said content from a first user to a second user.

It's very important that the software can communicate with the device firmware can dialogue so as to capture only one or a limited number of blocks of the electronic document data, thereby preventing that all the data are in the memory buffer device and in particular of a PC.

Said software also contain a whole series of keys in encrypted manner (the public key and the stylus) from time to time to be able to decrypt the block of data and to request the device according to a coded sequence, but different for each document, a block that it is not neatly continuously but only logically continuous and progressive for the sequence of the electronic document.

In this manner it is achieved the intended purposes, that is to provide the user an easy and free consultation of the text, the possibility of its transfer, even on multiple devices without it being in any way limited, however it is never permitted the possibility in physical possession of the entire work in one piece, and that there may be simultaneously two copies of the same work, or leaving the user only the limited right of use of the work and not the electronic properties of it.

This protection is achieved independently of the order to take advantage of the work but only thanks to the combination of the storage device and an application program to read and manage electronic works installed on the user device. In this way, the Internet connection is not an essential precondition for taking the electronics work, but only optional.

Even if the system were to be cracked in one or more encryption keys, the operator, by entering a new version of the application program and the adjustment of all the works to the new version at the first Internet connection, always it makes the system as much as possible protected unauthorized copies.

### Brief Description of Drawings

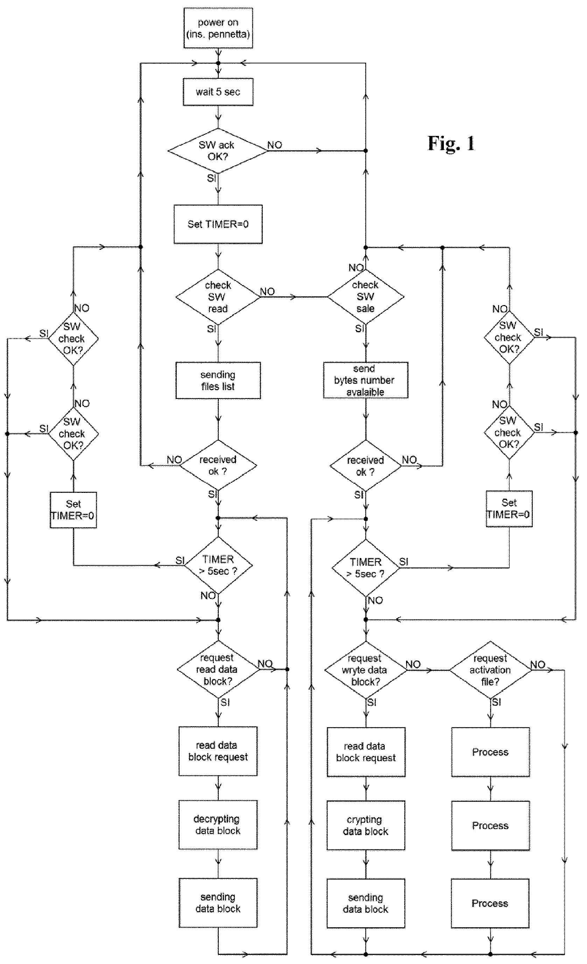

In Fig. 1 shows the flowchart of the storage device and display device to take advantage of the electronic document and the flow chart between the storage device and writebox when the latter, networked allows you to take and store within the storage device the selected document from user in the catalog.

### The preferred embodiment

All the operation of the project is based on an electronic storage device (for convenience could also take the form of a normal "memory stick" which is a common pen drive even if it hasn't the characteristics they do HW, SW).

In the preferred embodiment of the example below, therefore, reference will be made to said electronic storage device with the "memory stick" term.

From a hardware point of view of the memory stick is equipped with a memory chip non-volatile (variable depending on the model, and then the maximum amount of data that is able to contain), a microcontroller, internally provided with its own memory that manages the operation and a USB interface for data exchange and for power supply.

The stylus is stored in the microcontroller firmware that contains: the memory stick management program, the serial number that will be partially visible on the outside, and an alpha-numeric key 16Kb (16384 bytes) randomly generated during the production phase. The internal key unknown to the user is a main feature of the device.

That key of the memory stick is always hidden at the user, unlike what usually happens on any other pen drive or storage device on the market (hard drives, e-reader, tablet, etc.) which they use for encrypted content, passwords long, short, or maybe alphanumeric preset but notes at the user should be able to access their data. Another feature is the possibility for the said memory stick or to communicate only with their own viewing software or with the own sales software (for the acquisition or transfer of an electronic document always needs further hardware module that is connected to the Internet).

Said additional hardware module, called writebox, shall continuously monitor who is communicating with and also halting the action that is taking place if the control reports an error. With any other software, the system does not work and the operating system does not recognize it. The visualization software is free software and can be used in offline mode, while the sales software is sold together with the writebox, prior registration is required for use, and it works only with an active Internet connection.

There are several possible configurations of the system:
- A single memory stick sold with or without the data stored in the electronic document of interest;
- A memory stick that works in conjunction with an external device for writing and the transfer of electronic documents, referred to as writebox;
- A memory stick that incorporates both the pen single and both the external device writebox, in a single device the external appearance of a simple memory stick.

The cheapest model refers to a single memory stick, in which the sales software does not communicate directly with the pen itself but with said external device, said writebox, which allows you to write on that memory stick.

A door, called link door, said writebox precisely serves to connect it to a PC to receive the data to be transferred on the memory stick, another door, defined writing door, used to connect the memory stick on which you want to transfer the book chosen, and a door, door defined reading, used to connect another memory stick from which you want to transfer a file (that you will cut-and-paste and not copy-paste). The writebox can communicate only with software sales and bought the book can be downloaded only on a memory stick. With writebox and sales software the user can enter a password to inhibit reading in case of theft. If the password is entered, in case of transfer to another memory stick software sales will require password entry before proceeding.

The operation of the device may ideally be divided into two phases: the acquisition phase and the use phase.

### The acquisition phase

Here we will describe the operation of the LIBRARY-PEN in its simplest configuration (the one with Pennetta and separated Wrytebox), that best lends itself to the enunciation of the overall operation. The explanation of the operation of the other models will be made later.

When a user decides to make a purchase (book, song or movie), using a device (PC, tablet, e-reader, smartphone, etc..) Where the PAY-BOOK software has been previously installed and where it is already connected to the device writebox and that the memory stick on which the user wants to store what you download, enter the site and choose the work you prefer.

Just select the purchase button, the software connects to these writebox and acquires a set of data (complete serial number of writebox and the memory stick, memory stick and writebox public key, available space on the memory stick) that sends to the site in an encrypted form using a protocol RSA asymmetric key from 2048 bit. The site receives and verifies that the serial numbers of the two devices, there are no impediments to the transaction (ex. because they are stolen or because there is not enough space in the memory stick, etc.), acquires all work data that the user he chose (title, author, publisher, edition, ISBN code, price, etc.), and redirects the user to the site dedicated to the payment. After a positive phase of payment, the user is redirected to the site for the stage of data transfer.

The actual transfer begins with the encryption password that is transmitted using the protocol RSA asymmetric key first of the site and writebox, then among writebox and memory stick. Once the memory stick has communicated the "received" the password, the site starts to send one after another, the encrypted blocks that make up the file, and as soon as the memory stick communicates that the last block has been successfully received, the transaction is closed. When writebox begins to communicate a wish to issue a new file, the memory stick firmware places the new title in the index the memory stick marking it as inactive. As soon as the writebox communicates (using the RSA asymmetric key protocol) password file encryption, it is immediately encrypted with the internal password of the memory stick and saved on non-volatile memory. Subsequently, the encryption operation with internal key is repeated for each block of data received (these are transferred directly without using the RSA protocol, as already encrypted). When the last block has been stored in memory, it changes the flag for that title in the active file, and is communicated to writebox the OK file reception signal.

At this point the file purchase transaction is completed. The user can take the pen and begin consulting work by connecting to a display device of their choice. The file is saved in encrypted form in the user's memory stick that can only consult with Reader Book software but can not directly access the files, in practice it is only right to use the viewer but not the work.

### The use phase

The use phase the memory stick begins with its connection to a display device (PC, laptop, tablet, e-reader, etc.) which previously has been installed on the Reader Book software (otherwise the Library-pen is like a device without driver). If the software is installed and put into operation, the pen is detected and is proposed the index of the works it contains.

When choosing the work that you want to see, the pen transmits to the device (using the protocol RSA) its encryption key (after having previously decrypted with its internal key) and the first data block. This block and all subsequent will be transmitted without using the RSA protocol, but only decrypted with its internal key because however still encrypted with the key transmitted at the beginning of communication. The visualization software decrypts all blocks received from the memory stick (except the first) and on the basis of how the file was written and what want to see the user, ask the memory stick to send the file block that affects deleting from memory those already used to reduce exposure to possible theft of data from the device memory.

If the user enters notes and/or notes, these will be saved on the hard drive of the device in a special folder and will be displayed (on the user's choice) for each use of the file (marked by a precise code). The notes are fully available to the user. This means that you can't sell a work acquired, but can sell or dispose of the notes of that work to other buyers who in turn had acquired the same work (eg. The Gianni student can give in his notes to mate Michele class that in turn has bought the same book (operates with the same code) and then can see the same notes).

The other two versions of the device provide for, that the one writebox and the pen are together in a single device to allow the user greater comfort of acquisition of the works, the other version is like the second but with a display to be able to see directly resident works on Library-pen (basically as today's e-book but you can see the works that also contains a different device from himself).

File management is the same in each version.

For versions with integrated writebox, registration on the site is required.

The use phase according to the block diagram

Apart from the various timers inserted to compensate for any latency problems and delays due to the technologies and / or to the various devices.

The user, who wants to verify its own already present electronic document within the own memory stick, insert the same in communication with the device already equipped with the visualization software.

After then a supply phase there is the verification of the presence or not of such software on the system, which provides a list of the documentation which is present for consultation within the storage device.

After then a supply phase there is the verification of the presence or not of such software on the system, which provides a list of the documentation which is present for consultation within the storage device.

The read request by the visualization software, and ongoing monitoring that this software is present and functioning properly in the system, with a request to provide the pen which block identifies and resolves the data block encrypted with a first decryption with the key internally present in the firmware. This data block is then transferred to the visualization software which provides, to a second decryption with a key that varies in a cyclic manner based on the required block.

Be to verify that the sequence of request blocks does not correspond together bi to the logical order and/or time of storage, but only to that of display, so that the sequence of blocks (ideally corresponding to a paragraph) to display the first, second and third, could correspond to a sequence of blocks of request blocks 123, 354 and 21.

The decryption of each block, with a cyclic encryption key, which may be the same as the basis for a single document, but variable in its structure for each block, and its ordering is carried out by the software in a transparent manner for the user.

The acquisition phase according to the block diagram As already explained above is provided for this phase the presence, or less incorporated in the stylus, a writebox.

Apart from the various timers inserted to compensate for any latency problems and delays due to the technologies and / or to the various devices.

The user, who want to buy an electronic document already exists in the catalog from a machine connected to the Internet and store the document within their own memory stick, insert the same in communication with the device already equipped with the buy software.

After verification and control of the acquisition software, which is concerned to validate the writebox and works already contained within the pen, there is available space in the memory stick.

It is then chosen and request one particular document, possibly following the redirection to the payment portal, and then, given the approval of the transaction, the operator through its portal transmits in an encrypted document, according to a key which will also be stored in visualization software.

The document submitted by the operator, before being stored in the memory stick is further encrypted with the key character of each memory stick from the internal firmware.

Only at the end of the entire work transfer, by enabling a flag, the work is charged to the customer and then declared available for the user to browse, avoiding that there may be events of incomplete transmission but charged incorrectly to customers.

### Advantages and features of the invention

The invention has cured to the maximum security in every aspect, this being a fundamental condition for the achievement of ambitious goals.

At the same time we have worked to give the user maximum versatility of use and the best possible quality of the works.

The aspects that contribute to the definition of the invention security are as follows:
1. File Format
2. Communications (through insecure channels such as the internet)
3. " Storage " file (where user store them)
4. Use
5. Customer Notes

### Format

The file format is the first issue to be addressed to achieve security from fraudulent copies. Obviously it is a proprietary format, however, absolutely new, designed to be not easily maintained by those who try to analyze it. In practice, a plain text file (or pdf or any other format) is converted (along with all the instructions for the execution of commands) in a numbered sequence of blocks of 16K page size. Creates the block 0 (zero, even this length of 16K page size or multiples for very large works) where are indicated all the information about the file (title, author, publisher, cod. ISBN, cover price, minimum of Reader-book software release with which it can be read, date and expiration time (for timed books), password for reading (if necessary), user code (if necessary), the serial number of the Library-pen on which it resides, (etc.).

The blocks in which the work is decomposed, are then ordered randomly and the correct sequence (for example the block 1 is actually the block 47, the 2 is actually 15, and so on) shown in block zero. To each block is then assigned (always randomly) a number of "shift" used later for encryption. This way every file (even of the same book) is always written in a different way and only those who can read the zero block can understand it.

Also in block zero there is information (such as the serial number of the library-pen where the file must reside regularly) that help in safety management, blocking each reading in case of discrepancies.

### Communications

Communications have always been a very sensitive issue to be addressed and in our case they break down into two phases: the transfer of files from the site to the memory stick and transfer data from the memory stick to the device.

### Site/Library-pen

For this transfer is a randomly generated encryption key long as a data block ( 16K page size) and the zero block is encrypted. For subsequent blocks, the key is shifted (rotated) in the amount of bytes indicated in block zero for that block, thus obtaining a different encryption key for each data block. We can thus say that the entire work is encrypted with a long random key as the work itself, and this is so far the only way that has been proven to be safe for encryption of any data.

There remains the problem of transferring the encryption key to the user and to solve this problem we used an asymmetric key encryption (public key and private key) in accordance with a 2048-bit RSA protocol. This system allows you to encrypt a given with a "public key" and decrypt it with another "private key" (not decrypted with the public key) that never goes for the communication channels and therefore can't be intercepted. Transferring in this way the encryption key, the user can then operate in a safe mode.

### Library-pen/User

It operates in a manner substantially identical, except that the work is not completely transferred, but you send the key and zero block and then a block at a time depending on what calls for sw -book reader.

### Storage

The storage of the data we have seen in the description of the Library-pen. Substantially the incoming data (encrypted) are then encrypted with the internal key and remain stored in the memory of the memory stick with a double encryption, absolutely safe and inseparable from it.

### Use

The use of the device, already explained in the chapter of the OPERATION is characterized by the fact that does not depend on the device used, but only by the presence in the same of the visualization software (Reader-Book) with a considerable increase of the flexibility of use for the user. It said software being free and easily downloadable from the site, can be installed on all client devices, but can only use one at a time by plugging in the Library-pen, the display data being available only in the memory stick.

### Notes client

As in a regular paper book, the user can enter their own notes during the reading, but unlike paper book here the technology makes its weight felt. First of all the notes do not pollute the text of the book that remains as good as new, the user can choose to display them or not and can enter not only written (like the paper book) but also audio and / or video sequences and even Internet connections (which of course only work if the reading device is connected to the web). An interesting aspect is that these notes do not reside on the flash drive but on the device, and the user can dispose of it as he wants because he is the author. This means that you can give away or sell to those who, possessing the same book, you can view on your device (of course if it has the same book on your memory stick), and can do it even if in the meantime has already unpacked the book itself; in practice a user can turn into author.

## Claims

1. System for rendering the commercialization of electronic documents secure which consists of an electronic storage device, in whose memory are memorised / or can be memorised in an encrypted manner the various electronic documents (in the form of text, audio and/or video sequences, and any another type that can be recorded in an electronic format), capable to interfacing with a reading device or a device for managing the data memorised in said electronic device using proprietary software display or user software, where said electronic device has a firmware that dialogues with the proprietary software for make available at every call command of the device a block of data or a part of it, after having decrypted it at least once with one's own internal key, where a second decryption, before a block of data or a part of it, can be made available through a second phase of decryption, delegated to the proprietary software on the device.

2. System for rendering secure the commercialization of electronic documents according to claim 1 **characterized by** the fact that it allows the data of electronic documents to be stored within said electronic device only after said electronic device has been validated by the manager checking the legitimacy of the possessor and the content already present in it and transferring the required document to it through encryption that always different.

3. System for rendering secure the commercialization of electronic documents according to claim 1 or 2, **characterized by** the fact that the storage of data within the electronic device is encrypted and is inextricably connected with the hardware of just the electronic device, eventually through a protection key connected, in a secure way that is not visible to the user, to the firmware of the device.

4. System for rendering secure the commercialization of electronic documents according to claim 1 or 2, **characterized by** the fact that provides for the writing of said electronic documents in said electronic device of writebox either integrated in or outside the storage device, which is validated at each connection to the network by the system manager.

5. System for rendering secure the commercialization of electronic documents according to the previous claim, **characterized by** the fact that through said writebox it is possible to transfer, but not copy, the content or a part of it from a first electronic device to a second electronic device, in this way transferring the usage rights of said content from a first user to a second user.

6. System for rendering secure the commercialization of electronic documents according to claim 1 or 2, **characterized by** the fact that the software, which can communicate with the firmware of the device, from time to time acquires just one or a limited series of data blocks of the electronic document from the storage device, preventing that all the data is found in the memory buffer of the device and in particular of a PC.

7. System for rendering secure the commercialization of electronic documents according to claim 1 or 2, **characterized by** the fact that said software contains a series of encrypted keys for being able from time to time to decrypt the block of data and to request from the device, in accordance with a codified sequence, but different for each document, a block that is not neatly continuous but just logically continuous and progressive for the sequence of the electronic document.
